# EUROPÄISCHE PATENTSCHRIFT

(11) **EP 4 122 313 B1**
(45) Veröffentlichungstag und Bekanntmachung des Hinweises auf die Patenterteilung: **27.03.2024**
(21) Anmeldenummer: 22167052.4
(22) Anmeldetag: 07.04.2022
(51) Int. Cl.: A01F 29/00, A01F 29/22, A01D 43/08, A01F 29/09

(54) **VERFAHREN ZUR BESTIMMUNG DES VERSCHLEISSZUSTANDES EINER AN EINEM GEGENSCHNEIDETRÄGER ANGEORDNETEN GEGENSCHNEIDE SOWIE SELBSTFAHRENDER FELDHÄCKSLER**
METHOD FOR DETERMINING THE WEAR CONDITION OF A COUNTERBLADE ARRANGED ON A COUNTERBLADE CARRIER, AND SELF-PROPELLED FORAGE HARVESTER
PROCÉDÉ DE DÉTERMINATION DE L'ÉTAT D'USURE D'UNE CONTRE-LAME AGENCÉE SUR UN PORTE-CONTRE-LAME, AINSI QUE RAMASSEUSE-HACHEUSE AUTONOME

(30) Priorität: 20.07.2021 DE 102021118640
(43) Veröffentlichungstag der Anmeldung: 25.01.2023
(73) Patentinhaber: CLAAS Selbstfahrende Erntemaschinen GmbH, 33428 Harsewinkel (DE)
(72) Erfinder: Roggenland, Michael, 59757 Arnsberg (DE); Wehner, Gregor, 88356 Ostrach Unterweiler (DE); Harsch, Sebastian, 88348 Bad Saulgau (DE)
(74) Vertreter: CLAAS Gruppe

(56) Entgegenhaltungen:
- EP-A1- 2 225 931
- EP-A1- 2 559 334
- EP-A1- 3 738 427
- EP-A2- 2 764 767
- DE-A1-102017 117 966

## Beschreibung

Die vorliegende Erfindung betrifft ein Verfahren zur Bestimmung des Verschleißzustandes einer an einem Gegenschneideträger angeordneten Gegenschneide gemäß dem Oberbegriff des Anspruches 1. Weiterhin betrifft die Erfindung einen selbstfahrenden Feldhäcksler gemäß dem Oberbegriff des nebengeordneten Anspruches 11.

Selbstfahrende Feldhäcksler sind mit einer Häckselvorrichtung mit einer Messertrommel mit daran angeordneten Messern und einer an einem Gegenschneideträger angeordneten Gegenschneide, die mit den Messern zusammenwirkt, ausgestattet. Eine einen Schleifstein aufweisende Schleifvorrichtung zum Schleifen der Messer dient dazu, die Messer zu schärfen, um den Häckselvorgang effizient auszuführen und eine voreingestellte Häcksellänge des Häckselgutes zu gewährleisten. Eine Stellvorrichtung, die eine Steuervorrichtung und mindestens einen Aktor aufweist, ist dazu eingerichtet, die Gegenschneide auf die Messer zuzustellen, wodurch ein Spaltmaß bzw. Abstand zwischen der Gegenschneide und den Messern eingestellt wird, welches Einfluss auf die Häckselqualität hat.

Ein präziser und energieeffizienter Häckselprozess lässt sich nur durchführen, wenn neben einer geeigneten Messerschärfe auch ein bestimmter Abstand zwischen Gegenschneide und Messern besteht. Ein zu großer Abstand führt zu teils unvollständigem Schnitt des eintretenden Ernteguts und kann die aufzubringenden Schnittkräfte erhöhen. Ein zu geringer Abstand birgt insbesondere die Gefahr, dass sich Messer und Gegenschneide berühren, was zu Materialschäden und sogar zu gefährlichem Ablösen von Material und/oder vollständigen Maschinenelementen führen kann.

Die Messer der Häckseltrommel nutzen sich im Betrieb ab. Daher werden die Messer der Häckseltrommel wiederholt nachgeschliffen, um einerseits eine gleichbleibende Schnittqualität zu erzielen, andererseits die Schnittkräfte und damit die für das Häckseln aufzuwendende Antriebsenergie gering zu halten. Bei jedem Schleifvorgang wird mit der Schärfung der abgestumpften Schnittkanten Material an den Messern abgetragen. Dies führt zu einem veränderten Abstand zwischen den Schnittkanten der Messer und der Gegenschneide. Der Häckselprozess wird dadurch beeinträchtigt.

Neben den Messern der Messertrommel unterliegt auch die Gegenschneide einem Verschleiß. Die Wartung, d.h. das Wenden einer zweischneidigen Gegenschneide oder das Austauschen der Gegenschneide sind mit einem nicht unerheblichen Aufwand verbunden. Wird zu lange mit einer verschlissenen Gegenschneide gehäckselt, wirkt sich dies nachteilig auf die angrenzenden Systeme, wie die Messertrommel und die darauf angeordneten Messer durch Abnahme der Häckselqualität und/oder zunehmenden Verschleiß sowie den Antrieb des Feldhäckslers, insbesondere durch einen erhöhten Kraftstoffverbrauch wegen zunehmender Leistungsaufnahme der Häckselvorrichtung, aus.

Der zeitliche Aufwand zur visuellen Bestimmung des Verschleißzustandes durch eine Bedienperson, z.B. mit Vergleichsbildern, ist sehr hoch und nur subjektiv. Der Wartungsaufwand ist dabei erhöht, weil das Trommelgehäuse in eine Wartungsposition gebracht werden muss. Dazu müssen ein Vorsatzgerät abgehangen und die mechanischen Verbindungen zum Einzugsgehäuse demontiert werden.

Aus der DE 10 2011 005 317 B4 ist es beispielsweise bekannt, durch eine Anordnung einer Mehrzahl von Sensoren an der Gegenschneide Signale zu generieren, deren Auswertung zur Bestimmung des Verschleißes der Messer der Messertrommel verwendet wird. Für eine berührungslose Bestimmung von Schärfe der Schneide der Messer und dem Abstand der Schneide zur Gegenschneide kommen induktive Sensoren zur Anwendung. Mittels des bestimmten Abstands wird eine Zustellung der Gegenschneide angesteuert. Der Verschleißzustand der Gegenschneide findet in dem Verfahren hingegen keine Berücksichtigung.

Aus der WO 2018/127556 A1 sind ein Verfahren und ein selbstfahrender Feldhäcksler der eingangs genannte Art bekannt. Zur Überwachung der des Zustands von Messern und Gegenschneide der Häckselvorrichtung ist vorgesehen, dass Aktoren einer Stellvorrichtung zur Einstellung des Abstands der Gegenschneide zu den Messern der rotierenden Messertrommel eine Sensoranordnung zugeordnet ist, die einen als Kraftaufnehmer ausgeführten Sensor umfasst, der so konfiguriert ist, dass er die vom Aktor auf einen Rahmen der Erntemaschine ausgeübte Kraft misst. Die von dem Erntegut auf die Gegenschneide und den Gegenschneideträger ausgeübte Kraft wird dabei als Indikator für den Zustand sowohl der Messer als auch der Gegenschneide verwendet. Wenn sich dieser Zustand verschlechtert, steigt die Kraft, die auf die Gegenschneide und den Gegenschneideträger und den Scherbalkenhalter ausgeübt wird, weil sich das Erntegut zwischen der Gegenschneide und den Messern verkeilt. Durch Vergleichen mit einem Referenzwert für die Kraft wird bei Überschreiten des Referenzwertes ein Warnsignal an den Bediener gegeben, welches anzeigt, dass der Verschleiß der Gegenschneide und/oder der Messer kritisch geworden ist. Der wesentliche Nachteil an diesem Verfahren besteht darin, dass keine eindeutige und differenzierende Aussage über den Verschleißzustand der Messer und der Gegenschneide möglich ist. Wird ein Warnsignal ausgegeben, so muss die Bedienperson in einem Wartungsvorgang verifizieren, ob der Verschleißzustand der Messer, der Gegenschneide oder beider kritisch ist. DE 10 2017 117966 offenbart einen Feldhäcksler bei dem Messsignale zur Bestimmung des Abstands der Gegenschneide zu der Messertrommel generiert werden.

Ausgehend von dem vorstehend genannten Stand der Technik liegt der Erfindung die Aufgabe zugrunde, ein Verfahren zur Bestimmung des Verschleißzustandes einer an einem Gegenschneideträger angeordneten Gegenschneide und einen selbstfahrenden Feldhäcksler der vorstehend genannten Art weiterzubilden, um einer Bedienperson eine Information über den Verschleißzustand der Gegenschneide bereitzustellen, die eine quantitative und qualitative Beurteilung des Verschleißzustands der Gegenschneide ermöglicht.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe ausgehend vom Oberbegriff des nebengeordneten Anspruchs 11 in Verbindung mit dessen kennzeichnenden Merkmalen. Die hierauf jeweils folgenden abhängigen Ansprüche geben jeweils vorteilhafte Weiterbildungen der Erfindung wieder.

Gemäß der Erfindung wird ein Verfahren zur Bestimmung des Verschleißzustandes einer an einem Gegenschneideträger angeordneten Gegenschneide vorgeschlagen. Die Gegenschneide wirkt mit Messern einer rotierend angetriebenen Messertrommel einer Häckselvorrichtung zusammen. Die Gegenschneide wird mittels einer eine Steuervorrichtung und mindestens einen Aktor aufweisenden Stellvorrichtung auf die Messer zugestellt, wodurch ein Spaltmaß respektive Abstand zwischen der Gegenschneide und den Messern der Messertrommel eingestellt wird. Die Häckselvorrichtung umfasst eine einen Schleifstein aufweisende Schleifvorrichtung zum Schleifen der Messer. Erfindungsgemäß ist vorgesehen, dass durch eine Sensoranordnung Messsignale zur Bestimmung des Abstands der Gegenschneide zu der Messertrommel und durch eine weitere separate Sensoranordnung Messsignale zur Bestimmung eines Trommelradius der Messertrommel generiert werden, die durch eine Auswerteeinheit der Steuervorrichtung ausgewertet werden, wobei aus der Differenz von Trommelradius und Abstand der Gegenschneide zu der Messertrommel der Verschleißzustand der Gegenschneide abgeleitet wird. Mittels des erfindungsgemäßen Verfahrens lässt sich der Verschleißzustand der Gegenschneide bestimmen, ohne dass hierfür zusätzliche Wartungszeitfenster für eine visuelle Überprüfung eingeplant werden müssen. Vielmehr kann eine Wartung, die das Drehen der Gegenschneide um ihre Längsachse oder einen gegebenenfalls erforderlich werdenden Austausch zum Gegenstand hat, vorausschauender geplant werden. Das Verfahren nutzt zur Bestimmung des Verschleißzustandes der Gegenschneide das Prinzip der Sensorfusion, wobei hierzu verschiedene Messsignale zweier separater Sensoranordnungen verwendet werden. Die jeweiligen Sensoranordnungen arbeiten unabhängig voneinander.

Hierzu kann zur Bestimmung des Abstands der Gegenschneide zu der Messertrommel eine absolute Position des Gegenschneideträgers zu der Messertrommel bestimmt werden, wobei die daraus ermittelte Differenz von absolutem Trommelradius und absoluter Position des Gegenschneideträgers dem Verschleiß der Gegenschneide entspricht. Eine Bedienperson des selbstfahrenden Feldhäckslers ist somit genauer über den aktuellen Verschleißzustand der Gegenschneide informiert. Die Differenz von absolutem Trommelradius und absoluter Position des Gegenschneideträgers entspricht der Reduzierung der Breite der Gegenschneide durch den verschleißbedingten Abtrag an der Schneidkante.

Gemäß einer Weiterbildung kann auf eine fremdkraftbedingte Verschiebung der Gegenschneide geschlossen werden, wenn die Differenz zwischen Trommelradius und absoluter Position des Gegenschneideträgers zwischen zwei ausgeführten Einstellvorgängen der Gegenschneide um ein Vielfaches größer wird. Hierdurch kann der Bedienperson ein Hinweis darauf gegeben werden, dass ein Fremdkörper die Häckselvorrichtung durchlaufen hat, so dass neben einer Überprüfung der Gegenschneide auch eine Sichtprüfung der Messer auf etwaige Beschädigungen und/oder Positionsänderungen notwendig ist. Eine solche Differenz zwischen zwei ausgeführten Einstellvorgängen ergibt sich, wenn der Gegenschneideträger aufgrund der verschobenen Gegenschneide weiter zugestellt werden muss. Dadurch lässt sich auf einen Kontakt der Gegenschneide mit einem Fremdkörper schließen.

Besonders bevorzugt kann der bestimmte Verschleißzustand der Gegenschneide auf einer Ausgabeeinheit in der Form eines Verschleißindikators ausgegeben werden. Die Bedienperson des selbstfahrenden Feldhäckslers kann somit kontinuierlich über den Verschleißzustand informiert werden.

Dabei kann bei einem Überschreiten eines ersten Grenzwerts für die Differenz eine Informationsmeldung und/oder bei einem Überschreiten dieses oder eines weiteren Grenzwerts eine Warnmeldung auf der Ausgabeeinheit ausgegeben werden. Dadurch kann die Bedienperson auf eine etwaige Dringlichkeit der Einplanung und Durchführung einer Wartungsunterbrechung hingewiesen werden.

Insbesondere kann die Bestimmung des Trommelradius der Messertrommel und des Abstands der Gegenschneide zu der Messertrommel durch berührend und/oder berührungslos arbeitende Sensoren durchgeführt werden.

Gemäß einer bevorzugten Weiterbildung kann die Bestimmung des Trommelradius nach einem direkten oder indirekten Messprinzip durch die Sensoranordnung durchgeführt werden.

Beispielsweise kann gemäß einem indirekten Messprinzip durch die Sensoranordnung zur Bestimmung des Trommelradius ein dem Abstand eines Mittelpunkts der Messertrommel zur Schleiffläche des Schleifsteins oder dem Abstand einer Drehachse der Messertrommel zur Schleiffläche des Schleifsteins entsprechendes Signal bereitgestellt werden.

Gemäß einer bevorzugten Weiterbildung kann durch die Sensoranordnung zur Bestimmung des Abstands der Gegenschneide zu der Messertrommel ein die Position des Gegenschneideträgers relativ zum Trommelgehäuse entsprechendes Signal bereitgestellt werden.

Beispielsweise kann die Sensoranordnung zumindest einen Abstandssensor zur Detektion eines Abstands zwischen der Gegenschneide und dem Trommelgehäuse umfassen. Hierbei kann der zumindest eine Abstandssensor zur Bestimmung der Position des Gegenschneideträgers relativ zum Trommelgehäuse eingerichtet sein.

Gemäß einer bevorzugten Weiterbildung kann die Bestimmung des Trommelradius der Messertrommel und der absoluten Position des Gegenschneideträgers durch einen Einstellvorgang des Abstands der Gegenschneide zu der Messertrommel initiiert werden. Das Einstellen des Abstands der Gegenschneide erfolgt üblicherweise zumindest nach der Durchführung eines Schleifvorgangs der Messer, d.h. unmittelbar vor der Durchführung oder während einer Unterbrechung des Häckselvorgangs. Ein Einstellen der Gegenschneide erfolgt auch dann, wenn ein Anbau eines Vorsatzgerätes vorgenommen wurde. Das Verwenden der Durchführung des Einstellvorgangs der Gegenschneide als Auslöser für die Bestimmung des Trommelradius der Messertrommel und der Position der Gegenschneide zu der Messertrommel trägt dazu bei, die Effizienz des Häckselprozesses sicherzustellen, indem der Verschleiß der Gegenschneide zyklisch bestimmt wird. Insbesondere bedarf es dabei keines externen Auslösens durch die Bedienperson.

Hierbei kann während des Einstellvorgang der Gegenschneide durch zumindest einen Kontaktsensor oder zumindest einen berührungslos arbeitenden Sensor der Kontakt der Gegenschneide und der Messer detektiert werden, durch welchen im ersten Schritt zur Bestimmung des Abstands der Gegenschneide zu der Messertrommel die Bestimmung der absoluten Position des Gegenschneideträgers und im zweiten Schritt die Bestimmung des Trommelradius der Messertrommel ausgelöst wird. Als Kontaktsensoren können Klopfsensoren verwendet werden, die im Falle eines mechanischen Kontakts zwischen den Messern und der Gegenschneide entstehende, mechanische Schwingungen in der Gegenschneide erfassen. Als berührungslos arbeitende Sensoren zur Detektion des Abstands zwischen den Messern und der Gegenschneide können beispielsweise Induktionssensoren oder durch eine Kamera zur Anwendung kommen.

Die eingangs gestellte Aufgabe wird durch einen selbstfahrenden Feldhäcksler gemäß dem Oberbegriff des Anspruches 11 mit den kennzeichnenden Merkmalen des Anspruches 11 gelöst.

Gemäß dem Anspruch 11 wird ein selbstfahrender Feldhäcksler vorgeschlagen, umfassend eine Häckselvorrichtung mit einer rotierend angetriebenen Messertrommel mit daran angeordneten Messern und einer an einem Gegenschneideträger angeordneten Gegenschneide, die mit den Messern zusammenwirkt, eine einen Schleifstein aufweisende Schleifvorrichtung zum Schleifen der Messer, eine Stellvorrichtung, die eine Steuervorrichtung und mindestens einen von dieser angesteuerten Aktor aufweist, wobei die Stellvorrichtung dazu eingerichtet ist, die Gegenschneide auf die Messer zuzustellen, wodurch ein Spaltmaß respektive Abstand zwischen der Gegenschneide und den Messern eingestellt wird, wobei die Häckselvorrichtung zwei separate Sensoranordnungen umfasst, die dazu eingerichtet sind, Messsignale zur Bestimmung eines Trommelradius der Messertrommel und des Abstands der Gegenschneide zu der Messertrommel zu generieren, und dass eine den beiden Sensoranordnungen zugeordnete Auswerteeinheit der Steuervorrichtung vorgesehen ist, welche dazu eingerichtet ist, die Messsignale auszuwerten und aus der Differenz von bestimmtem Trommelradius und bestimmten Abstand den Verschleißzustand der Gegenschneide abzuleiten. Auf alle Ausführungen zu dem vorschlagsgemäßen Verfahren zur Bestimmung des Verschleißzustandes darf verwiesen werden.

Insbesondere können die Auswerteeinheit und die beiden Sensoranordnungen dazu eingerichtet sein, das Verfahren nach einem der Ansprüche 1 bis 10 auszuführen.

Hierbei können die Sensoranordnungen berührend und/oder berührungslos arbeiten, wobei die eine Sensoranordnung zur Bestimmung der Position des Gegenschneideträgers relativ zum Trommelgehäuse der Häckselvorrichtung eingerichtet sein kann und die andere Sensoranordnung zur Bestimmung des Trommelradius der Messertrommel eingerichtet sein kann.

Weiterhin kann die eine Sensoranordnung zur Bestimmung der Position des Gegenschneideträgers relativ zum Trommelgehäuse der Häckselvorrichtung zumindest einen Positionssensor, zumindest einen Abstandssensor oder zumindest einen Kontaktsensor umfassen.

Bevorzugt kann die andere Sensoranordnung zur direkten oder indirekten Bestimmung des Trommelradius der Messertrommel eingerichtet sein. Beispielsweise kann die Sensoranordnung einen Ultraschallsensor oder einen Lasersensor umfassen, welche zur indirekten Bestimmung des Trommelradius der Messertrommel dienen. So kann die Sensoranordnung dazu eingerichtet sein, einen Abstand eines Mittelpunkts bzw. einer Rotationsachse der Messertrommel zu einer Schleiffläche einer Schleifvorrichtung für die Messer der Häckselvorrichtung zu bestimmen, wenn die Schleiffläche an einem der Messer anliegt.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in einer Seitenansicht;
- Fig. 2: eine schematische und perspektivische Darstellung eines Trommelgehäuses einer Häckselvorrichtung;
- Fig. 3: eine Detailansicht des Trommelgehäuses gemäß Fig. 2;
- Fig. 4: eine schematisierte Darstellung von Messertrommel und weiterer Komponenten der Häckselvorrichtung; und
- Fig. 5: ein vereinfachtes Ablaufdiagramm des erfindungsgemäßen Verfahrens.

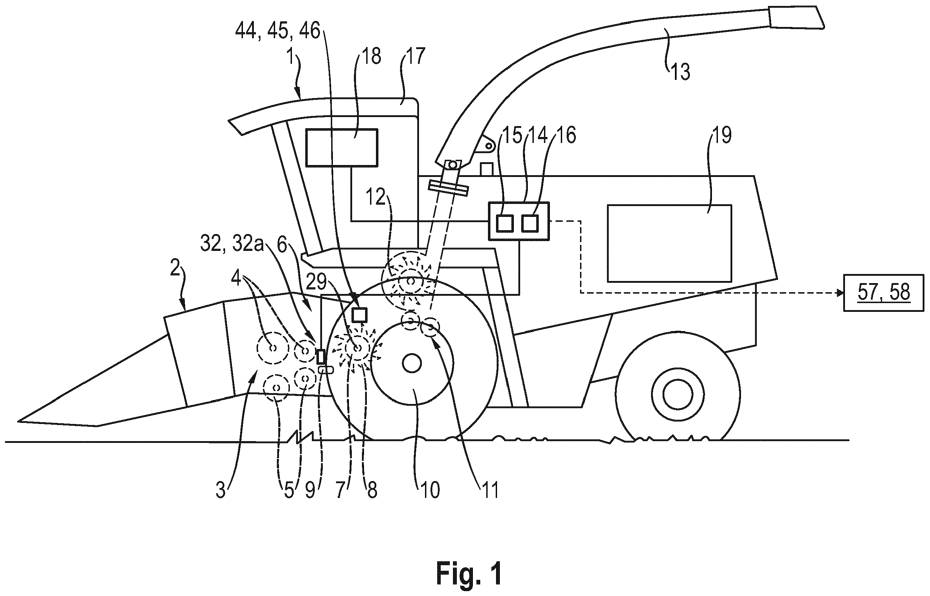

In Fig. 1 ist ein selbstfahrender Feldhäcksler 1 in einer Seitenansicht schematisch dargestellt, der mit einem Vorsatzgerät 2 versehen ist. In der Fig. 1 ist als Vorsatzgerät 2 ein Maispflücker schematisch angedeutet, es können jedoch auch andere Vorsatzgeräte wie beispielsweise eine Pickup an den Feldhäcksler 1 angebaut sein. Das Vorsatzgerät 2 nimmt das Erntegut vom Feld auf und fördert es einer Einzugsvorrichtung 3 zu, die im Ausführungsbeispiel aus einer Walzengruppe mit paarweise angeordneten oberen und unteren Einzugswalzen 4, 5 besteht. Die Einzugswalzen 4, 5 der Einzugsvorrichtung 3 üben eine Presskraft auf das aufgenommene Erntegut aus. Die Einzugsvorrichtung 3 fördert das zu einer Erntegutmatte verdichtete Erntegut einer Häckselvorrichtung 6 zu, welche eine um eine Rotationsachse 29 rotierend angetriebene Messertrommel 7 mit über deren Umfang verteilt angeordneten Messern 8 aufweist. Die Messer 8 schneiden die von der Einzugsvorrichtung 3 zugeführte Erntegutmatte an einer Gegenschneide 9. Das geschnittene bzw. gehäckselte Erntegut wird durch die Rotationsbewegung der Messertrommel 7 in einen nachgeordneten Auswurfschacht 10 geschleudert, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleuniger 12 zusätzlich beschleunigt durch einen Auswurfkrümmer 13 in ein mitgeführtes Transportfahrzeug gefördert wird.

Zum Antreiben der Arbeitsaggregate des Feldhäckslers 1, d.h. Vorsatzgerät 2, Einzugsvorrichtung 3, Häckselvorrichtung 6 sowie Nachbeschleuniger 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient unter anderem auch zum Betreiben eines hydrodynamischen Fahrantriebs des Feldhäckslers 1.

Der Feldhäcksler 1 umfasst eine Fahrerkabine 17, in der eine Eingabe-Ausgabeeinheit 18 angeordnet ist. Weiterhin umfasst der Feldhäcksler 1 eine Steuervorrichtung 14, welche eine Speichereinheit 15 zum Hinterlegen von Daten und eine als Recheneinheit ausgeführte Auswerteeinheit 16 zur Verarbeitung von in der Speichereinheit 15 hinterlegten Daten umfasst. Die Steuervorrichtung 14 ist zur Ansteuerung zumindest der Häckselvorrichtung 6 eingerichtet. Die Eingabe-Ausgabeeinheit 18 umfasst eine Anzeige sowie Eingabemittel.

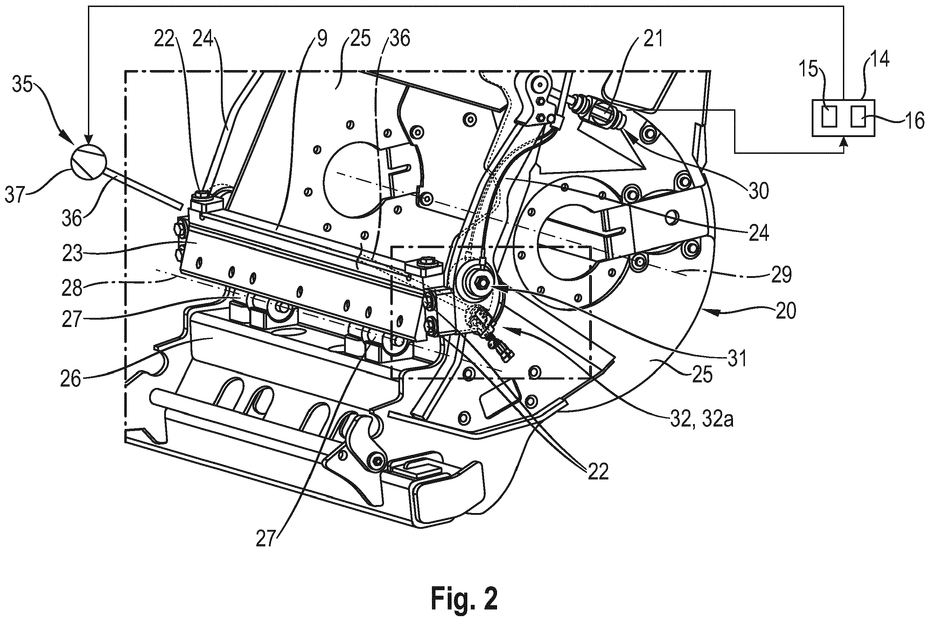

In Fig. 2 ist eine schematische und perspektivische Darstellung eines Trommelgehäuses 20 der Häckselvorrichtung 6 dargestellt. Das Trommelgehäuse 20 weist eine im Wesentlichen kreiszylindrische Form auf, und umschließt die - in Fig. 2 nicht dargestellte - Messertrommel 7 abschnittsweise in Umfangsrichtung. Die Gegenschneide 9 ist an einem Gegenschneideträger 23 lösbar befestigt, hier und vorzugsweise durch Schraubverbindungen 22. Der Gegenschneideträger 23 ist achsparallel zur Rotationsachse 29 der Messertrommel 7 verlaufend angeordnet. An den Gegenschneideträger 23 schließen sich endseitig zwei einander gegenüberliegende Hebelarme 24 an, die sich im Wesentlichen in vertikaler Richtung zum Gegenschneideträger 23 erstrecken. Die Hebelarme 24 verlaufen parallel zu Seitenwänden 25 des Trommelgehäuses 20. Die einander gegenüberliegenden Seitenwände 25 des Trommelgehäuses 20 begrenzen die Messertrommel 7 in axialer Richtung.

Der Gegenschneideträger 23 ist beweglich an einer ortsfest an dem Trommelgehäuse 20 angeordneten Basis 26, wie einem Rahmenelement, gelagert, um ein Verstellen der Gegenschneide 9 radial auf die Messertrommel 7 zu und von dieser weg zu ermöglichen. Der Gegenschneideträger 23 ist durch eine Anordnung von Schwenklagern 27 so an der Basis 26 gelagert, dass der Gegenschneideträger 23 um eine Schwenkachse 28 schwenkbar ist, um das radiale Verstellen der Gegenschneide 9 zu ermöglichen. Die Schwenkachse 28 des Gegenschneideträgers 23 erstreckt sich dabei parallel zur Rotationsachse 29 der Messertrommel 7.

Zur Verstellung der Gegenschneide 9 ist eine Stellvorrichtung 30 vorgesehen. Genauer weist die Stellvorrichtung 30 auf beiden Seiten des Trommelgehäuses 20 zumindest einen Aktor 21 auf. Der jeweilige Aktor 21 ist mit dem korrespondierend angeordneten Hebelarm 24 des Gegenschneideträgers 23 verbunden. Die Komponenten der Stellvorrichtung 30 sind auf beiden Seiten des Trommelgehäuses 20 zueinander identisch ausgebildet. Die Hebelarme 24 des Gegenschneideträgers 23 sind stellbeweglich an der Basis 26 und insbesondere am Trommelgehäuse 20 gelagert und mit dem Gegenschneideträger 23 verbunden, so dass mit einer Stellbewegung der Hebelarme 24 die radiale Verstellung des Gegenschneideträgers 23 antreibbar ist. Hierzu kann der jeweilige Hebelarm 24 an einem Längsende des Gegenschneideträgers 23 mittels zweier Schrauben 22 verschraubt sein.

Die Gegenschneide 9 ist mittels der Stellvorrichtung 30 auf die Messer 8 zustellbar, wodurch ein Spaltmaß, nachfolgend als Abstand A bezeichnet, zwischen der Gegenschneide 9 und den Messern 8 auf der Messertrommel 7 eingestellt wird. Die Ansteuerung der Stellvorrichtung 30 kann durch die Steuervorrichtung 14 erfolgen. Denkbar ist auch, dass die Stellvorrichtung 30 eine separate Steuervorrichtung aufweist.

Um die Gegenschneide 9 während des Häckselprozesses gegen eine Schwingungsanregung zu schützen, weist die Stellvorrichtung 30 außerdem eine Klemmvorrichtung oder Bremsvorrichtung 31 auf, welche ein sicheres Halten und Verspannen der Gegenschneide 9 im Häckselprozess und dennoch ein feinfühliges Verstellen der Gegenschneide 9 bei einem Einstellvorgang erlaubt. Bevorzugt ist die Klemmvorrichtung oder Bremsvorrichtung 31 hydraulisch betätigbar.

Wie in Fig. 1 schematisch angedeutet, ist eine Sensoranordnung 32 mit zumindest einem Abstandssensor 32a zur Detektion des Abstands A zwischen der Gegenschneide 9 und dem Trommelgehäuse 20 vorgesehen. Insbesondere ist der zumindest eine Abstandssensor 32a zwischen dem Hebelarm 24 und dem Trommelgehäuse 20 im Bereich des Gegenschneideträgers 23 angeordnet. Vorzugsweise ist auch auf der gegenüberliegenden Seite des Trommelgehäuses 20 ein Abstandssensor 32a als Teil der Sensoranordnung 32 zwischen dieser und dem Hebelarm 24 angeordnet. Weiterhin ist eine weitere, separate Sensoranordnung 44 mit zumindest einem Sensor zur Bestimmung eines absoluten Trommelradius R2 sowie zumindest einem Klopfsensor 46 der Häckselvorrichtung 6 zugeordnet.

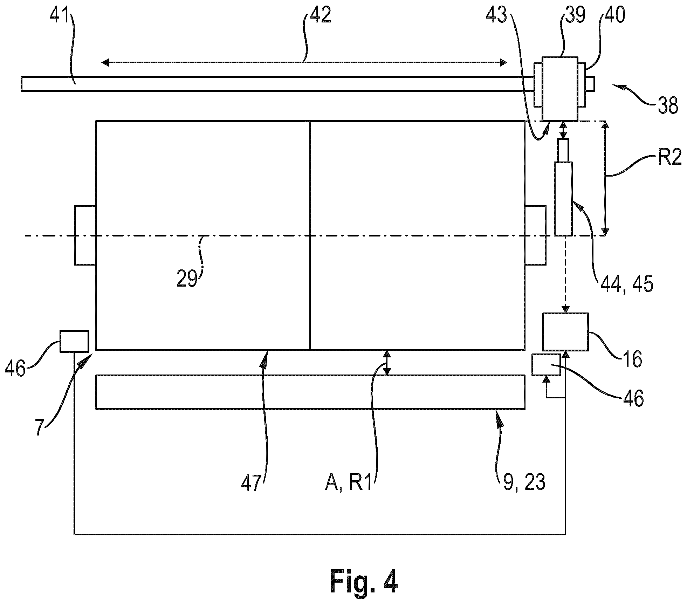

Des Weiteren kann der Häckselvorrichtung 6 eine Reinigungsvorrichtung 35 zugeordnet sein, die der Entfernung von Staub dient, der bei einem Nachschleifvorgang der Messer 8 durch eine in Fig. 4 schematisch dargestellte Schleifvorrichtung 38 entsteht. Die Reinigungsvorrichtung 35 kann insbesondere als Absaugvorrichtung oder als Abblasvorrichtung ausgeführt sein. Durch die Reinigungsvorrichtung 35 kann der Ablagerung von Schleifstaub entgegengewirkt werden, welcher die Messgenauigkeit des zumindest einen Abstandssensors 32a beeinflussen kann. Im dargestellten Ausführungsbeispiel ist die Reinigungsvorrichtung 35 als eine Absaugvorrichtung ausgeführt und umfasst zwei Absaugleitungen 36, wobei jeweils eine Absaugleitung 36 einem Abstandssensor 32a zugeordnet ist. Weiterhin umfasst die Reinigungsvorrichtung 35 wenigstens ein Gebläse 37, an welches die beiden Absaugleitungen 36 angeschlossen sind.

Die Reinigungsvorrichtung 35 wird vorzugsweise von der Steuervorrichtung 14 angesteuert. Hierbei kann die Steuervorrichtung 14 dazu eingerichtet sein, die Reinigungsvorrichtung 35 in Abhängigkeit von zumindest einem Parameter automatisch anzusteuern, um den durch einen Schleifvorgang erzeugten Schleifstaub zu entfernen. Ein möglicher Parameter kann das Ergebnis einer durch die Steuervorrichtung 14 durchführbaren Plausibilitätsprüfung der von dem zumindest einen Abstandssensor 33 generierten Sensorwerte sein. Denkbar ist aber auch, dass die Reinigungsvorrichtung 35 an die Ausführung des Schleifvorgangs gekoppelt angesteuert wird, um den Schleifstaub vor, während und/oder nach einem Schleifvorgang zu entfernen.

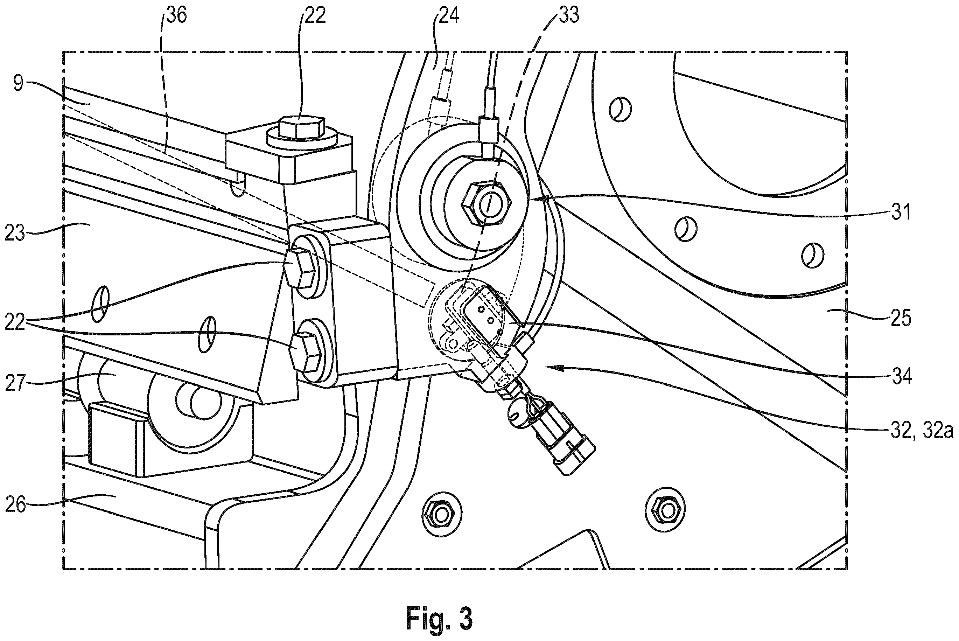

Die Darstellung in Fig. 3 zeigt eine Detailansicht des Trommelgehäuses 20 gemäß Fig. 2. Der zumindest eine Abstandssensor 32a umfasst hier und vorzugsweise zumindest zwei Sensorkomponenten 33, 34, wobei eine Sensorkomponente 33 unmittelbar an dem Trommelgehäuse 20 angeordnet und die weitere Sensorkomponente 34 dem Gegenschneideträger 23 zugeordnet ist. Die weitere Sensorkomponente 34 ist an dem zur an dem Trommelgehäuse 20 angeordneten Sensorkomponente 33 benachbarten Hebelarm 24 angeordnet. Die weitere Sensorkomponente 34 ist innenseitig an dem Hebelarm 24 angeordnet. Unter der innenseitigen Anordnung der weiteren Sensorkomponente 34 ist die Anordnung auf der dem Trommelgehäuses 20 zugewandten Seite des Hebelarmes 24 zu verstehen. Die weitere Sensorkomponente 34 kann auch an dem Gegenschneideträger 23 oder an dem Schwenklager 27 angeordnet sein.

Bevorzugt kann die Sensoranordnung 32 mit dem zumindest einen Abstandssensor 32a berührungslos arbeitend ausgeführt sein. Die Sensoranordnung 32 kann auch berührend arbeiten. Vorteilhaft ist, dass mittels des zumindest einen berührungslos arbeitenden Abstandssensors 32a Messdaten kontinuierlich auch während des Arbeitsprozesses des Feldhäckslers 1 generiert werden, wodurch eine fortlaufende Überwachung des Abstands A erreichbar ist. Bevorzugt kann der zumindest eine Abstandssensor 32a zur Bestimmung einer absoluten Position R1 des Gegenschneideträgers 23 entlang eines Messweges eingerichtet sein. Der zumindest eine Abstandssensor 32a ist insbesondere als Absolutwertsensor ausgeführt.

Bei dem zumindest einen Abstandssensor 32a handelt es hier und vorzugsweise um einen Magnetbandsensor. Dabei umfasst der als Magnetbandsensor ausgeführte Abstandssensor 32a einen Lesekopf, der die am Trommelgehäuse 20 angeordnete Sensorkomponente 33 ausbildet, und ein Magnetband, welches die an dem Hebelarm 24 angeordnete Sensorkomponente 34 ausbildet. Hierbei können sich im Lesekopf magnetoresistive Sensoren bzw. Hall-Sensoren befinden. Beide Sensorkomponenten 33, 34 können beispielsweise jeweils eine Schutzeinrichtung aufweisen, welche die jeweilige Sensorkomponente 33, 34 zumindest abschnittsweise umschließt. Die Schutzeinrichtung kann als eine Ummantelung aus einem Kunststoff ausgeführt sein. Die Schutzeinrichtung dient dazu, den jeweiligen Abstandssensor 32a vor Schleifstaub oder sonstigen Verunreinigungen bzw. auch vor Feuchtigkeit zu schützen.

Mittels des zumindest einen Abstandssensors 32a wird eine Veränderung der Position des Gegenschneideträgers 23 relativ zu dem Trommelgehäuse 20 erfasst. Genauer, es wird ein Verstellweg des Gegenschneideträgers 23 gegenüber dem Trommelgehäuse 20 bestimmt, der durch die Ansteuerung der Aktoren 21 bei der Einstellung des Spaltmaßes respektive Anstands A bewirkt wird. Durch die Sensoranordnung 32 werden Messsignale zur Bestimmung der absoluten Position R1 des Gegenschneideträgers 23 zu der Messertrommel 7 generiert und der Auswerteeinheit 16 zur Auswertung zugeführt.

Mittels der Sensoranordnung 32 wird die absoluter Position R1 des Gegenschneideträgers 23 zu der Messertrommel 7 in vorstehend als ein mögliches Ausführungsbeispiel beschriebener Weise bestimmt. Die absolute Position R1 des Gegenschneideträgers 23 zu der Messertrommel 7 kann alternativ auch durch eine mit Positionssensoren und/oder Kontaktsensoren ausgeführten Sensoranordnung 32 bestimmt werden.

In Fig. 4 ist eine schematisierte Darstellung der Messertrommel 7 und weiterer Komponenten der Häckselvorrichtung 6 dargestellt. Die um die Rotationsachse 29 rotierend angetriebene Messertrommel 7 beschreibt mit den Schneidkanten der nicht dargestellten Messer 8 einen Hüllkreis 47 mit einem Trommelradius R2.

Die Schleifvorrichtung 38 umfasst einen Schleifstein 39, der in einem Schleifschlitten 40 aufgenommen ist. Der Schleifstein 39 wird zusammen mit dem Schleifschlitten 40 entlang einer Führungsschiene 41 translatorisch in Richtung des Doppelpfeils 42 durch einen nicht dargestellten Antrieb hin und her bewegt. Der Schleifstein 39 weist eine den Messern 8 zugewandte Schleiffläche 43 auf, die beim Nachschleifen der Messer 8 an deren Schneidkanten zur Anlage kommt.

Befindet sich der Schleifstein 39 im Bereich eines Umkehrpunktes der Schleifbewegung, wie in Fig. 4 gezeigt, liegt die Schleiffläche 43 auf der radialen Position der geschliffenen Schneidkanten der Messer 8 bzw. weist von dieser Radialposition einen definierten und bekannten Offset auf. Der Offset kann beispielsweise dadurch hervorgerufen werden, dass der Schleifstein 39 durch eine Federkraft beaufschlagt um den Offset in radialer Richtung nach innen, d.h. auf die Schneidkanten der Messer 8 zu, gedrückt wird.

Die Position der Schleiffläche 43 wird durch eine weitere Sensoranordnung 44 bestimmt. Die Sensoranordnung 44 arbeitet bevorzugt berührungslos und kann hierzu zumindest einen als Ultraschallsensor oder Lasersensor ausgeführten Sensor 45 aufweisen. Mittels des Sensors 45 wird ein Abstand eines Mittelpunkts bzw. der Rotationsachse 29 der Messertrommel 7 zu der Schleiffläche 43 bestimmt. Dieser Abstand entspricht dem absoluten Trommelradius R2. Die Messung durch den Sensor 45 erfolgt vorzugsweise im Bereich des Umkehrpunktes der translatorischen Bewegung am Ende der Führungsschiene 41. Im Umkehrpunkt ist die Schleiffläche 43 leicht sensorisch zu erfassen, wobei im Umkehrpunkt die Position der Schleiffläche 43 mit der radialen Position der Schneidkanten der Messer 8 korreliert.

Mittels der weiteren Sensoranordnung 44 wird der absolute Trommelradius R2 vorstehend als ein mögliches Ausführungsbeispiel beschriebener Weise indirekt bestimmt. Die Bestimmung des absoluten Trommelradius R2 kann auch direkt durch eine entsprechend dafür eingerichtete Sensoranordnung 44 durchgeführt werden.

Prinzipiell werden erfindungsgemäß durch zwei separate Sensoranordnungen Messsignale zur Bestimmung des absoluten Trommelradius R2 der Messertrommel 7 und der absoluter Position R1 der Gegenschneide 9 zu der Messertrommel 7 generiert, die durch die Auswerteeinheit 16 ausgewertet werden. Im Anschluss wird durch die Auswerteeinheit 16 aus der Differenz von Trommelradius R2 und Abstand R1 der Verschleißzustand der Gegenschneide 9 abgeleitet. Die Differenz von Trommelradius R2 und Position R1 entspricht einem Verschleißwert VW der Gegenschneide 9. Der erfindungsgemäß bestimmte Verschleißzustand der Gegenschneide 9 wird auf einer Anzeige der Eingabe - Ausgabeeinheit 18 in Form eines Verschleißindikators ausgegeben. Zudem kann der Verschleißwert respektive der Verschleißindikator auf einem mobilen Datenverarbeitungsgerät 57 ausgegeben werden. Weiterhin kann der Verschleißwert VW an eine entfernte Datenverarbeitungsvorrichtung 58, wie einen Hofrechner, übermittelt werden, um beispielsweise frühzeitig auf eine erforderliche Beschaffung von Gegenschneiden hinzuweisen. Ebenso kann auf diese Weise beispielsweise das Verschleißverhalten auf einem spezifischen Schlag dokumentiert werden.

Die Bestimmung des Trommelradius R2 der Messertrommel 7 und des Abstands R2 der Gegenschneide 9 zu der Messertrommel 7 kann durch einen Einstellvorgang der Gegenschneide 9 initiiert werden. Hierzu kann der Häckselvorrichtung 6 zumindest ein Klopfsensor 46 zugeordnet sein. Mittels des zumindest einen Klopfsensors 46, vorzugsweise sind Klopfsensoren 46 auf beiden Seiten der Messertrommel 7 angeordnet, wird eine Berührlage der Gegenschneide 9, in der die Gegenschneide 9 und die Messer 8 miteinander in berührenden Eingriff kommen, akustisch erfasst. Das Detektieren der Berührlage der Gegenschneide 9 kann als Auslöser verwendet, um in einem ersten Schritt die Bestimmung der absoluten Position R1 des Gegenschneideträgers 23 zu der Messertrommel 7 und im zweiten Schritt die Bestimmung des Trommelradius R2 der Messertrommel 7 auszulösen. Die für einen jeweiligen Einstellvorgang bestimmten Werte für den Trommelradius R2 der Messertrommel 7 und den Abstand R2 der Gegenschneide 9 zu der Messertrommel 7 werden in der Speichereinheit 15 abrufbar hinterlegt.

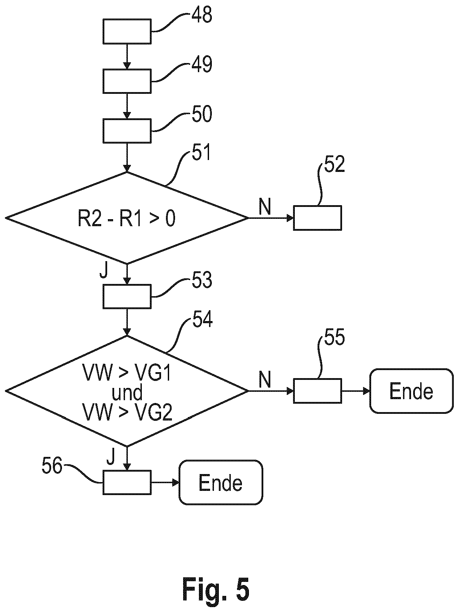

In Fig. 5 ist ein vereinfachtes Ablaufdiagramm des erfindungsgemäßen Verfahrens dargestellt.

In dem ersten Verfahrensschritt 48 wird die Durchführung eines Einstellvorganges der Gegenschneide 9 detektiert. Dies geschieht durch das Sensieren der Berührlage der Gegenschneide 9, in welcher die Gegenschneide 9 und die Messer 8 miteinander in berührenden Eingriff kommen. Das Detektieren der Berührlage der Gegenschneide 9 löst einen ersten Messvorgang durch die Sensoranordnung 32 aus, welcher im zweiten Verfahrensschritt 49 durchgeführt wird. Als Ergebnis des durch den ersten Verfahrensschritt 48 ausgelösten Messvorgangs im zweiten Verfahrensschritt 49 wird durch die Sensoranordnung 32 zur Bestimmung der Position R1 des Gegenschneideträgers 23 zu der Messertrommel 7 das der Position R1 des Gegenschneideträgers 23 relativ zum Trommelgehäuse 20 entsprechende Messsignal bereitgestellt. Der Verfahrensschritt 49 umfasst zudem die Auswertung des Messsignals um die absolute Position R1 des Gegenschneideträgers 23 zu der Messertrommel 7 zu bestimmen und zu speichern.

Im darauffolgenden Verfahrensschritt 50 wird die Bestimmung des absoluten Trommelradius R2 der Messertrommel 7 durchgeführt. Hierzu wird die Bestimmung des Trommelradius R2 nach einem direkten oder indirekten Messprinzip durch die Sensoranordnung 44 durchgeführt. Ein indirektes Messprinzip ist weiter oben anhand von Fig. 4 beispielhaft erläutert. Der Verfahrensschritt 50 umfasst die Auswertung des bereitgestellten Messsignals der Sensoranordnung 44, um den absoluten Trommelradius R2 zu bestimmen und zu speichern.

Im Verfahrensschritt 51 wird durch Differenzbildung aus absolutem Trommelradius R2 und absoluter Position R1 des Gegenschneideträgers 23 der Verschleißwert der Gegenschneide 9 bestimmt. Dabei wird geprüft, ob die Differenz aus absolutem Trommelradius R2 und absoluter Position R1 größer Null ist. Bejahendenfalls wird mit Verfahrensschritt 53 fortgefahren, verneinendenfalls wird zum Verfahrensschritt 52 übergegangen.

Ist die Differenz aus absolutem Trommelradius R2 und absoluter Position R1 zwischen dem vorangehend ausgeführten Einstellvorgang und dem aktuellen Einstellvorgang der Gegenschneide 9 kleiner Null, so deutet dies auf eine Lageänderung der Gegenschneide 9 hin. Eine solche Lageänderung der Gegenschneide 9 kann durch einen Fremdkörper verursacht sein. Auf eine fremdkraftbedingte Verschiebung der Gegenschneide 9 kann insbesondere dann geschlossen werden, wenn die Differenz zwischen absolutem Trommelradius R2 und absoluter Position R1 des Gegenschneideträgers 23 zwischen dem vorangehend ausgeführten Einstellvorgang und dem aktuellen Einstellvorgang der Gegenschneide 9 um ein Vielfaches größer wird. Eine solche Differenz ergibt sich, wenn der Gegenschneideträger 23 aufgrund der verschobenen Gegenschneide 9 weiter zugestellt werden muss. Dadurch lässt sich auf einen Kontakt der Gegenschneide 9 mit einem Fremdkörper schließen. Zur Durchführung des Vergleichs werden die in der Speichereinheit 15 hinterlegten Werte des vorangehenden Einstellvorgangs abgerufen. Entsprechend wird im Verfahrensschritt 52 ein entsprechender Warnhinweis auf der Eingabe-Ausgabe-Einheit 18 ausgegeben. Insbesondere kann der Warnhinweis darauf abstellen, eine visuelle Kontrolle der Position der Gegenschneide 9 vorzunehmen. Das Verfahren wird an dieser Stelle beendet. Nach einer visuellen Kontrolle erfolgt die Durchführung eines weiteren Einstellvorgangs, welcher das Verfahren erneut initiiert.

Im Verfahrensschritt 53 wird der Verschleißwert VW durch die Auswerteeinheit 16 bestimmt und in der Speichereinheit 15 hinterlegt.

Im darauffolgenden Verfahrensschritt 54 wird der bestimmte Verschleißwert mit einem ersten Grenzwert VG1 und einem zweiten Grenzwert VG2 verglichen. Ist der bestimmte Verschleißwert VW größer als der erste Grenzwert VG1 und kleiner als der zweite Grenzwert VG2 so wird zum Verfahrensschritt 55 übergegangen. In dem Verfahrensschritt 55 kann eine Informationsmeldung auf der Eingabe-Ausgabe-Einheit 18 ausgegeben werden, die auf den aktuellen Verschleißzustand des Gegenmessers 9 hinweist. Ist hingegen der bestimmte Verschleißwert VW auch als der zweite Grenzwert VG2 so wird zum Verfahrensschritt 56 übergegangen. Im Verfahrensschritt 56 eine explizite Warnmeldung auf der Eingabe-Ausgabe-Einheit 18 ausgegeben. Durch die Warnmeldung kann die Bedienperson auf eine etwaige Dringlichkeit der Einplanung und Durchführung einer Wartungsunterbrechung hingewiesen werden.

Grundsätzlich wird auf der Eingabe-Ausgabe-Einheit 18 der jeweils bestimmte Verschleißwert VW der Bedienperson grafisch visualisiert und/oder als Absolutwert und als Relativwert dargestellt.

### Bezugszeichenliste

| | | | |
|---|---|---|---|
| 1 | Feldhäcksler | 33 | Sensorkomponente |
| 2 | Vorsatzgerät | 34 | Sensorkomponente |
| 3 | Einzugsvorrichtung | 35 | Reinigungsvorrichtung |
| 4 | Einzugswalze | 36 | Absaugleitung |
| 5 | Einzugswalze | 37 | Gebläse |
| 6 | Häckselvorrichtung | 38 | Schleifvorrichtung |
| 7 | Messertrommel | 39 | Schleifstein |
| 8 | Messer | 40 | Schleifschlitten |
| 9 | Gegenschneide | 41 | Führungsschiene |
| 10 | Auswurfschacht | 42 | Doppelpfeil |
| 11 | Nachbearbeitungsvorrichtung | 43 | Schleiffläche |
| 12 | Nachbeschleuniger | 44 | Sensoranordnung |
| 13 | Auswurfkrümmer | 45 | Sensor |
| 14 | Steuervorrichtung | 46 | Klopfsensor |
| 15 | Speichereinheit | 47 | Hüllkreis |
| 16 | Auswerteeinheit | 48 | Verfahrensschritt |
| 17 | Fahrerkabine | 49 | Verfahrensschritt |
| 18 | Eingabe-Ausgabeeinheit | 50 | Verfahrensschritt |
| 19 | Antriebsmotor | 51 | Verfahrensschritt |
| 20 | Trommelgehäuse | 52 | Verfahrensschritt |
| 21 | Aktor | 53 | Verfahrensschritt |
| 22 | Schraubverbindung | 54 | Verfahrensschritt |
| 23 | Gegenschneideträger | 55 | Verfahrensschritt |
| 24 | Hebelarm | 56 | Verfahrensschritt |
| 25 | Seitenwand | 57 | Mobiles Datenverarbeitungsgerät |
| 26 | Basis | 58 | Datenverarbeitungsvorrichtung |
| 27 | Schwenklager | | |
| 28 | Schwenkachse | A | Abstand |
| 29 | Rotationsachse | R1 | Absolute Position von 23 |
| 30 | Stellvorrichtung | R2 | Absoluter Trommelradius |
| 31 | Bremsvorrichtung | VG1 | Erster Grenzwert |
| 32 | Sensoranordnung | VG2 | Zweier Grenzwert |
| 32a | Abstandssensor | VW | Verschleißwert |

## Patentansprüche

1. Verfahren zur Bestimmung des Verschleißzustandes einer an einem Gegenschneideträger (23) angeordneten Gegenschneide (9), welche mit Messern (8) einer rotierend angetriebenen Messertrommel (7) einer Häckselvorrichtung (6) zusammenwirkt, wobei die Gegenschneide (9) mittels einer eine Steuervorrichtung (14) und mindestens einen Aktor (21) aufweisenden Stellvorrichtung (30) auf die Messer (8) zugestellt wird, wodurch ein Abstand (A) zwischen der Gegenschneide (9) und den Messern (8) eingestellt wird, sowie dass die Häckselvorrichtung (6) eine einen Schleifstein (39) aufweisende Schleifvorrichtung (38) zum Schleifen der Messer (8) umfasst, **dadurch gekennzeichnet, dass** durch eine Sensoranordnung (32) Messsignale zur Bestimmung des Abstands (A) der Gegenschneide (9) zu der Messertrommel (7) und durch eine weitere Sensoranordnung (44) Messsignale zur Bestimmung eines Trommelradius (R2) der Messertrommel (7) generiert werden, die durch eine Auswerteeinheit (16) der Steuervorrichtung (14) ausgewertet werden, wobei aus der Differenz von Trommelradius (R2) und Abstand (A) der Verschleißzustand der Gegenschneide (9) abgeleitet wird.

2. Verfahren nach Anspruch 1, **dadurch gekennzeichnet, dass** zur Bestimmung des Abstands der Gegenschneide (9) zu der Messertrommel (7) eine absolute Position (R1) des Gegenschneideträgers (23) zu der Messertrommel (7) bestimmt wird, wobei die daraus ermittelte Differenz von absolutem Trommelradius (R2) und absoluter Position (R1) des Gegenschneideträgers (23) dem Verschleiß der Gegenschneide (9) entspricht.

3. Verfahren nach Anspruch 2, **dadurch gekennzeichnet, dass** auf eine fremdkraftbedingte Verschiebung der Gegenschneide (9) geschlossen wird, wenn die Differenz zwischen Trommelradius (R2) und absoluter Position (R1) des Gegenschneideträgers (23) zwischen zwei ausgeführten Einstellvorgängen der Gegenschneide (9) um ein Vielfaches größer wird.

4. Verfahren nach einem der vorangehenden Ansprüche, **dadurch gekennzeichnet, dass** der bestimmte Verschleißzustand der Gegenschneide (9) auf einer Ausgabeeinheit (18, 57) in Form eines Verschleißindikators ausgegeben wird.

5. Verfahren nach Anspruch 4, **dadurch gekennzeichnet, dass** bei einem Überschreiten eines ersten Grenzwerts (VG1) für die Differenz eine Informationsmeldung und/oder bei einem Überschreiten dieses oder eines weiteren Grenzwerts (VG2) eine Warnmeldung auf der Ausgabeeinheit (18, 57, 58) ausgegeben wird.

6. Verfahren nach einem der vorangehenden Ansprüche, **dadurch gekennzeichnet, dass** die Bestimmung des Trommelradius (R2) der Messertrommel (R1) und des Abstands (A) der Gegenschneide (9) zu der Messertrommel (7) durch berührend und/oder berührungslos arbeitende Sensoren (32a, 45) durchgeführt wird.

7. Verfahren nach einem der vorangehenden Ansprüche, **dadurch gekennzeichnet, dass** die Bestimmung des Trommelradius (R2) nach einem direkten oder indirekten Messprinzip durch die Sensoranordnung (44) durchgeführt wird.

8. Verfahren nach einem der vorangehenden Ansprüche, **dadurch gekennzeichnet, dass** durch die Sensoranordnung (32) zur Bestimmung des Abstands (A) der Gegenschneide (9) zu der Messertrommel (7) ein die absolute Position (R1) des Gegenschneideträgers (23) relativ zum Trommelgehäuse (20) entsprechendes Messsignal bereitgestellt wird.

9. Verfahren nach einem der vorangehenden Ansprüche, **dadurch gekennzeichnet, dass** die Bestimmung des Trommelradius (R2) der Messertrommel (7) und der absoluten Position (R1) des Gegenschneideträgers (23) zu der Messertrommel (7) durch einen Einstellvorgang des Abstands (A) der Gegenschneide (9) initiiert wird.

10. Verfahren nach Anspruch 9, **dadurch gekennzeichnet, dass** während des Einstellvorgang der Gegenschneide (9) durch zumindest einen Kontaktsensor (46) oder zumindest einen berührungslos arbeitenden Sensor ein Kontakt der Gegenschneide (9) und der Messer (8) detektiert wird, durch welchen im ersten Schritt die Bestimmung der absoluten Position (R1) des Gegenschneideträgers (23) zu der Messertrommel (7) und im zweiten Schritt die Bestimmung des Trommelradius (R1) der Messertrommel (7) ausgelöst wird.

11. Selbstfahrender Feldhäcksler (1), umfassend eine Häckselvorrichtung (6) mit einer rotierend angetriebenen Messertrommel (7) mit daran angeordneten Messern (8) und einer an einem Gegenschneideträger (23) angeordneten Gegenschneide (9), die mit den Messern (8) zusammenwirkt, eine einen Schleifstein (39) aufweisende Schleifvorrichtung (38) zum Schleifen der Messer (8), eine Stellvorrichtung (30), die eine Steuervorrichtung (14) und mindestens einen Aktor (21) aufweist, wobei die Stellvorrichtung (30) dazu eingerichtet ist, die Gegenschneide (9) auf die Messer (8) zuzustellen, wodurch ein Abstand (A) zwischen der Gegenschneide (9) und den Messern (8) eingestellt wird, **dadurch gekennzeichnet, dass** die Häckselvorrichtung (6) zwei separate Sensoranordnungen (32, 44) umfasst, die dazu eingerichtet sind, Messsignale zur Bestimmung eines Trommelradius (R2) der Messertrommel (7) und des Abstands (A) der Gegenschneide (9) zu der Messertrommel (7) zu generieren, und dass eine den beiden Sensoranordnungen (32. 44) zugeordnete Auswerteeinheit (16) der Steuervorrichtung (14) vorgesehen ist, welche dazu eingerichtet ist, die Messsignale auszuwerten und aus der Differenz von bestimmtem Trommelradius (R2) und bestimmten Abstand (A) den Verschleißzustand der Gegenschneide (9) abzuleiten.

12. Feldhäcksler (1) nach Anspruch 11, **dadurch gekennzeichnet, dass** die Auswerteeinheit (16) und die beiden Sensoranordnungen (32, 44) dazu eingerichtet sind, das Verfahren nach einem der Ansprüche 1 bis 10 auszuführen.

13. Feldhäcksler (1) nach Anspruch 11 oder 12, **dadurch gekennzeichnet, dass** die Sensoranordnungen (32, 44) berührend und/oder berührungslos arbeiten, wobei die eine Sensoranordnung (32) zur Bestimmung einer Position (R1) des Gegenschneideträgers (23) relativ zum Trommelgehäuse (20) der Häckselvorrichtung (6) eingerichtet ist und die andere Sensoranordnung (44) zur Bestimmung des Trommelradius (R2) der Messertrommel (7) eingerichtet ist.

14. Feldhäcksler (1) nach Anspruch 13, **dadurch gekennzeichnet, dass** die eine Sensoranordnung (32) zur Bestimmung der absoluten Position (R1) des Gegenschneideträgers (23) relativ zum Trommelgehäuse (20) der Häckselvorrichtung (6) zumindest einen Positionssensor, zumindest einen Abstandssensor (32a) oder zumindest einen Kontaktsensor umfasst.

15. Feldhäcksler (1) nach einem der Ansprüche 11 bis 14, **dadurch gekennzeichnet, dass** die andere Sensoranordnung (44) zur direkten oder indirekten Bestimmung des Trommelradius (R2) der Messertrommel (7) eingerichtet ist.

## Claims

1. Method for determining the state of wear of a counter-knife (9) which is arranged on a counter-knife carrier (23) and interacts with knives (8) of a rotationally driven knife drum (7) of a chopping device (6), wherein the counter-knife (9) is moved towards the knives (8) by means of an adjusting device (30) having a control device (14) and at least one actuator (21), wherein a distance (A) between the counter-knife (9) and the knives (8) is set, and in that the chopping device (6) comprises a grinding device (38) having a grinding stone (39) for grinding the knives (8), **characterised in that** measurement signals for determining the distance (A) of the counter-knife (9) from the knife drum (7) are generated by a sensor arrangement (32) and measurement signals for determining a drum radius (R2) of the knife drum (7) are generated by a further sensor arrangement (44), which are analysed by an evaluation unit (16) of the control device (14), the wear condition of the counter-knife (9) being derived from the difference between the drum radius (R2) and the distance (A).

2. Method according to claim 1, **characterised in that** an absolute position (R1) of the counter-knife carrier (23) relative to the knife drum (7) is determined in order to determine the distance of the counter-knife (9) from the knife drum (7), the difference between the absolute drum radius (R2) and the absolute position (R1) of the counter-knife carrier (23) determined therefrom corresponding to the wear of the counter-knife (9).

3. Method according to claim 2, **characterised in that** a displacement of the counter-knife (9) caused by an external force is inferred when the difference between the drum radius (R2) and the absolute position (R1) of the counter-knife carrier (23) between two executed adjustment processes of the counter-knife (9) increases by a multiple.

4. Method according to one of the preceding claims, **characterised in that** the determined state of wear of the counter cutting edge (9) is output on an output unit (18, 57) in the form of a wear indicator.

5. Method according to claim 4, **characterised in that** if a first limit value (VG1) for the difference is exceeded, an information message and/or if this or a further limit value (VG2) is exceeded, a warning message is output on the output unit (18, 57, 58).

6. Method according to one of the preceding claims, **characterised in that** the determination of the drum radius (R2) of the knife drum (R1) and the distance (A) of the counter-knife (9) to the knife drum (7) is carried out by sensors (32a, 45) operating in contact and/or without contact.

7. Method according to one of the preceding claims, **characterised in that** the determination of the drum radius (R2) is carried out according to a direct or indirect measuring principle by the sensor arrangement (44).

8. Method according to one of the preceding claims, **characterised in that** a measurement signal corresponding to the absolute position (R1) of the counter-knife carrier (23) relative to the drum housing (20) is provided by the sensor arrangement (32) for determining the distance (A) of the counter-knife (9) from the knife drum (7).

9. Method according to one of the preceding claims, **characterised in that** the determination of the drum radius (R2) of the cutter drum (7) and the absolute position (R1) of the counter-knife carrier (23) relative to the cutter drum (7) is initiated by an adjustment process of the distance (A) of the counter-knife (9).

10. Method according to claim 9, **characterised in that** during the setting process of the counter-knife (9), contact between the counter-knife (9) and the knives (8) is detected by at least one contact sensor (46) or at least one sensor operating without contact, by means of which contact the determination of the absolute position (R1) of the counter-knife carrier (23) relative to the knife drum (7) is triggered in the first step and the determination of the drum radius (R1) of the knife drum (7) is triggered in the second step.

11. A self-propelled forage harvester (1), comprising a chopping device (6) with a rotationally driven knife drum (7) with knives (8) arranged thereon and a counter-knife (9) arranged on a counter-knife carrier (23), which counter-knife co-operates with the knives (8), a grinding device (38) having a grinding stone (39) for grinding the knives (8), an adjusting device (30) which has a control device (14) and at least one actuator (21), the adjusting device (30) being set up for this purpose, the counter-knife (9) to the knives (8), wherein a distance (A) between the counter-knife (9) and the knives (8) is set, **characterised in that** the chopping device (6) comprises two separate sensor arrangements (32, 44) which are set up to generate measurement signals for determining a drum radius (R2) of the knife drum (7) and the distance (A) of the counter-knife (9) from the knife drum (7), and **in that** an evaluation unit (44) associated with the two sensor arrangements (32. 44) of the control device (14) is provided, which is set up to evaluate the measurement signals and to derive the wear condition of the counter-knife (9) from the difference between the determined drum radius (R2) and the determined distance (A).

12. Forage harvester (1) according to claim 11, **characterised in that** the evaluation unit (16) and the two sensor arrangements (32, 44) are set up to carry out the method according to one of claims 1 to 10.

13. Forage harvester (1) according to claim 11 or 12, **characterised in that** the sensor arrangements (32, 44) operate in a contacting and/or non-contacting manner, one sensor arrangement (32) being set up to determine a position (R1) of the counter-cutter carrier (23) relative to the drum housing (20) of the chopping device (6) and the other sensor arrangement (44) being set up to determine the drum radius (R2) of the knife drum (7).

14. Forage harvester (1) according to claim 13, **characterised in that** the one sensor arrangement (32) for determining the absolute position (R1) of the counter-cutting carrier (23) relative to the drum housing (20) of the forage harvester (6) comprises at least one position sensor, at least one distance sensor (32a) or at least one contact sensor.

15. Forage harvester (1) according to one of claims 11 to 14, **characterised in that** the other sensor arrangement (44) is set up for direct or indirect determination of the drum radius (R2) of the knife drum (7).

## Revendications

1. Procédé de détermination de l'état d'usure d'une contre-lame (9) qui est disposée sur un support de contre-lame (23) et coopère avec des couteaux (8) d'un tambour à couteaux (7) entraîné en rotation d'un dispositif hacheur (6), la contre-lame (9) étant rapprochée des couteaux (8) au moyen d'un dispositif de positionnement (30) présentant un dispositif de commande (14) et au moins un actionneur (21), grâce à quoi une distance (A) est réglée entre la contre-lame (9) et les couteaux (8), et que le dispositif hacheur (6) comprend un dispositif d'affûtage (38), présentant une pierre d'affûtage (39), pour affûter les couteaux (8), **caractérisé en ce qu'**un système de capteur (32) génère des signaux de mesure pour déterminer la distance (A) de la contre-lame (9) par rapport au tambour à couteaux (7), et un autre système de capteur (44) génère des signaux de mesure pour déterminer un rayon de tambour (R2) du tambour à couteaux (7), qui sont évalués par un dispositif d'évaluation (16) du dispositif de commande (14), l'état d'usure de la contre-lame (9) étant déduit de la différence entre le rayon de tambour (R2) et la distance (A).

2. Procédé selon la revendication 1, **caractérisé en ce que** pour la détermination de la distance de la contre-lame (9) par rapport au tambour à couteaux (7), on détermine une position absolue (R1) du support de contre-lame (23) par rapport au tambour à couteaux (7), la différence ainsi déterminée entre le rayon de tambour absolu (R2) et la position absolue (R1) du support de contre-lame (23) correspondant à l'usure de la contre-lame (9).

3. Procédé selon la revendication 2, **caractérisé en ce que** l'on conclut à un déplacement de la contre-lame (9) dû à une force extérieure, si la différence entre le rayon de tambour (R2) et la position absolue (R1) du support de contre-lame (23) augmente de façon importante entre deux opérations de réglage de la contre-lame (9).

4. Procédé selon l'une des revendications précédentes, **caractérisé en ce que** l'état d'usure déterminé de la contre-lame (9) est émis sur une unité de sortie (18, 57), sous la forme d'un indicateur d'usure.

5. Procédé selon la revendication 4, **caractérisé en ce qu'**en cas de dépassement d'une première valeur limite (VG1) pour la différence, un message d'information est émis sur l'unité de sortie (18, 57, 58) et/ou en cas de dépassement de cette valeur limite ou d'une autre valeur limite (VG2), un message d'avertissement est émis sur l'unité de sortie.

6. Procédé selon l'une des revendications précédentes, **caractérisé en ce que** la détermination du rayon de tambour (R2) du tambour à couteaux (R1) et de la distance (A) de la contre-lame (9) par rapport au tambour à couteaux (7) est réalisée par des capteurs (32a, 45) fonctionnant avec contact et/ou sans contact.

7. Procédé selon l'une des revendications précédentes, **caractérisé en ce que** la détermination du rayon de tambour (R2) est réalisée selon un principe de mesure direct ou indirect par le système de capteurs (44).

8. Procédé selon l'une des revendications précédentes, **caractérisé en ce que** pour la détermination de la distance (A) de la contre-lame (9) par rapport au tambour à couteaux (7), le système de capteur (32) fournit un signal de mesure correspondant à la position absolue (R1) du support de contre-lame (23) par rapport au corps de tambour (20).

9. Procédé selon l'une des revendications précédentes, **caractérisé en ce que** la détermination du rayon de tambour (R2) du tambour à couteaux (7) et de la position absolue (R1) du support de contre-lame (23) par rapport au tambour à couteaux (7) est déclenchée par une opération de réglage de la distance (A) de la contre-lame (9).

10. Procédé selon la revendication 9, **caractérisé en ce que** pendant l'opération de réglage de la contre-lame (9), un contact de la contre-lame (9) et des couteaux (8) est détecté par au moins un capteur de contact (46) ou au moins un capteur fonctionnant sans contact, contact par lequel la détermination de la position absolue (R1) du support de contre-lame (23) par rapport au tambour à couteaux (7) est déclenchée à la première étape, et la détermination du rayon de tambour (R1) du tambour à couteaux (7) est déclenchée à la deuxième étape.

11. Ramasseuse-hacheuse automotrice (1) comprenant un dispositif hacheur (6) doté d'un tambour à couteaux (7) entraîné en rotation, sur lequel sont disposés des couteaux (8), et d'une contre-lame (9) qui est disposée sur le support de contre-lame (23) et coopère avec les couteaux (8), un dispositif d'affûtage (38), présentant une pierre d'affûtage (39), pour l'affûtage des couteaux (8), un dispositif de positionnement (30) qui présente un dispositif de commande (14) et au moins un actionneur (21), le dispositif de positionnement (30) étant conçu pour rapprocher la contre-lame (9) des couteaux (8), grâce à quoi une distance (A) est réglée entre la contre-lame (9) et les couteaux (8), **caractérisée en ce que** le dispositif hacheur (6) comprend deux systèmes de capteur (32, 44) distincts qui sont conçus pour générer des signaux de mesure en vue de la détermination d'un rayon de tambour (R2) du tambour à couteaux (7) et de la distance (A) de la contre-lame (9) par rapport au tambour à couteaux (7), et **en ce qu'**il est prévu une unité d'évaluation (16) du dispositif de commande (14) qui est associée aux deux systèmes de capteur (32, 44) et qui est conçue pour évaluer les signaux de mesure et pour déduire l'état d'usure de la contre-lame (9) à partir de la différence entre le rayon de tambour (R2) déterminé et la distance (A) déterminée.

12. Ramasseuse-hacheuse (1) selon la revendication 11, **caractérisée en ce que** l'unité d'évaluation (16) et les deux systèmes de capteur (32, 44) sont conçus pour mettre en oeuvre le procédé selon l'une des revendications 1 à 10.

13. Ramasseuse-hacheuse (1) selon la revendication 11 ou 12, **caractérisée en ce que** les systèmes de capteur (32, 44) fonctionnent avec contact et/ou sans contact, l'un (32) des systèmes de capteur étant conçu pour la détermination d'une position (R1) du support de contre-lame (23) par rapport au corps de tambour (20) du dispositif hacheur (6), et l'autre système de capteur (44) étant conçu pour la détermination du rayon de tambour (R2) du tambour à couteaux (7).

14. Ramasseuse-hacheuse (1) selon la revendication 13, **caractérisée en ce que** pour la détermination de la position absolue (R1) du support de contre-lame (23) par rapport au corps de tambour (20) du dispositif hacheur (6), l'un (32) des systèmes de capteur comprend au moins un capteur de position, au moins un capteur de distance (32a) ou au moins un capteur de contact.

15. Ramasseuse-hacheuse (1) selon l'une des revendications 11 à 14, **caractérisée en ce que** l'autre système de capteur (44) est conçu pour la détermination directe ou indirecte du rayon de tambour du tambour à couteaux (7).
